# EUROPÄISCHE PATENTSCHRIFT

(11) **EP 3 654 298 B1**
(45) Veröffentlichungstag und Bekanntmachung des Hinweises auf die Patenterteilung: **08.03.2023**
(21) Anmeldenummer: 19191376.3
(22) Anmeldetag: 13.08.2019
(51) Int. Cl.: G07C 9/00, B60R 25/40, E05B 85/16, E05B 81/24, E05B 81/80

(54) **ZUGRIFFSSTEUEREINRICHTUNG FÜR EINE NOTBETÄTIGUNG UND ZUGEHÖRIGES VERFAHREN**
ACCESS CONTROL DEVICE FOR EMERGENCY ACTUATION AND ASSOCIATED METHOD
DISPOSITIF DE COMMANDE D'ACCÈS POUR UN ACTIONNEMENT D'URGENCE ET PROCÉDÉ ASSOCIÉ

(30) Priorität: 16.11.2018 DE 102018128905
(43) Veröffentlichungstag der Anmeldung: 20.05.2020
(73) Patentinhaber: HUF Hülsbeck & Fürst GmbH & Co. KG, 42551 Velbert (DE)
(72) Erfinder: MÖNIG, Stefan, 58332 Schwelm (DE); SIMON, Jörg, 42489 Wülfrath (DE); GORENZWEIG, Igor, 42109 Wuppertal (DE); OBERBECKMANN, Kai Magnus, 42105 Wuppertal (DE); WITTWER, Dirk, 42579 Heiligenhaus (DE)
(74) Vertreter: Zenz Patentanwälte Partnerschaft mbB

(56) Entgegenhaltungen:
- DE-A1-102012 004 000
- DE-A1-102017 101 421
- DE-T5-112013 000 504

## Beschreibung

Die Erfindung betrifft eine Zugriffssteuereinrichtung mit elektronischen Komponenten zur Bereitstellung einer Notbetätigungsfunktion an Kraftfahrzeugen. Insbesondere betrifft die Erfindung eine Zugriffssteuereinrichtung mit einer Steuerschaltung und einer Kommunikationsschaltung, die mit der Steuerschaltung gekoppelt ist.

Die Zugriffssteuereinrichtung weist außerdem einen elektrischen Antrieb auf, der mit einem Betätigungsabschnitt gekoppelt ist. Der Betätigungsabschnitt ist zur Kopplung mit einem fahrzeugseitigen Sperrmittel einer Öffnungsverriegelung ausgebildet und wird von dem elektrischen Antrieb unter Ansteuerung der Steuerschaltung zur Veränderung einer Sperrwirkung der Sperrmittel angetrieben. Die Öffnungsverriegelung kann insbesondere eine Fahrzeugtür, eine Klappe (z.B. Kofferraumabdeckung) an einem Fahrzeug oder eine sonstige Abdeckung (z.B. Tankabdeckung) gegen unerlaubte Öffnung sperren.

Die Zugriffssteuereinrichtung weist außerdem eine erste Versorgungsschnittstelle auf, die zur Kopplung insbesondere der Steuerschaltung und der Kommunikationsschaltung mit einer Spannungsversorgung eines Bordnetzes eines Fahrzeuges ausgebildet ist. Eine solche erste Schnittstelle kann z.B. in Gestalt eines Steckverbinders zur Kopplung mit einem Kabelbaum eines Fahrzeuges ausgebildet sein.

Zugriffssteuereinrichtung der genannten Art übernehmen, insbesondere in Gestalt von Türgriffen bei Keyless-Entry-Systemen, Kommunikations- und Sensierungsaufgaben am Fahrzeug. Ein Bediener kann solche Türgriffe umfassen, um eine Türbetätigung auszulösen und ein Türschloss zu entriegeln. Kommunikationsschaltungen im Türgriff mit zugeordneten Sende-/Empfangseinrichtungen wickeln in diesem Betriebszustand drahtlose Kommunikation mit Zugangsmitteln ab, um die Berechtigung für einen Zugriff auf das Fahrzeug zu prüfen. Dabei wird die eigentliche Authentifizierung eines Benutzers und dessen Zugangsberechtigung von einem Bordseitigen System des Fahrzeugs durchgeführt. Der Benutzer führt ein Legitimationsmittel mit sich, dass als elektronischer Datenträger ausgebildet ist und welches in einen drahtlosen Funkdialog mit dem bordseitigen System treten kann. Die vom Datenträger des Benutzers an das bordseitige System übermittelten Daten werden verifiziert und der Zugriffssteuereinrichtung wird vom bordseitigen System signalisiert, die Sperrung einer Tür freizugeben.

Mit zunehmender Elektrifizierung von Fahrzeugen und einer zunehmenden Virtualisierung von Schließmitteln verändern sich die Anforderungen an Zugriffssteuereinrichtungen. Inzwischen werden zunehmend gespeicherte Daten als Schließmittel verwendet, insbesondere werden körperlose, virtuelle Schlüssel in Gestalt kodierter Daten, die beispielsweise auf Mobilgeräten gespeichert sind, zu Schließzwecken verwendet. Dabei werden Daten zur Authentifizierung von einem Mobilgerät an das Fahrzeug übermittelt, dort geprüft und ein Zugang zum Fahrzeug wird gewährt, wenn die Authentifizierung der übermittelten Daten erfolgreich war.

Dies stellt die Fahrzeugentwicklung vor das Problem, dass seltener dem Fahrzeug zugeordneten physischen Schlüssel vom Benutzer eines Fahrzeuges mitgeführt werden, wie sie beispielsweise in Gestalt von Fernbedienungen (zum Beispiel Keyless-Entry) seit längerem bekannt sind. Derartige Fernbedienungsschlüssel enthielten bislang neben den Komponenten zum drahtlosen Datenaustausch noch Raum für einen mechanischen Not-Schlüssel, der im Notfall (beispielsweise bei Systemausfall am Fahrzeug) eine mechanische Entriegelung ermöglichte. Dazu wurde meist der Türgriff in eine bestimmte Position gebracht oder es wurde eine Schutzabdeckung abgenommen, so dass anschließend mit dem mechanischen Not-Schlüssel ein händischer Schließvorgang am Schloss ausgeführt werden konnte. Da die mechanischen Not-Schlüssel nun aufgrund der zunehmenden Verbreitung virtueller Schlüssel nicht länger vorausgesetzt werden können, besteht ein Problem in der Bereitstellung eines Not-Zugangs bei Ausfall von Fahrzeugsystemen.

Aus dem Dokument DE 11 2013 000 504 T5 ist ein Zugangssystem bekannt, dass einen Zugang zu einem Fahrzeug ermöglicht, wenn die Hauptbatterie des Fahrzeuges unzureichende Energie bereitstellt.

Das Dokument DE 110 2012 004 000 A1 beschreibt einen Transponderschlüssel und eine damit gesteuerte Zugangseinheit, wobei der Zugangseinheit in einem Notbetrieb elektrische Energie extern zugeführt wird.

Aufgabe der Erfindung ist es, eine alternative Gestaltung von Zugriffssteuereinrichtung mit Notentriegelungsfunktionalität zur Verfügung zu stellen.

Diese Aufgabe wird gelöst durch eine Zugriffssteuereinrichtung mit den Merkmalen des Patentanspruches 1.

Erfindungsgemäß ist die Zugriffssteuereinrichtung mit ihren Komponenten in einem Fahrzeugtürgriff aufgenommen.

Fahrzeugtürgriffe enthalten nach dem Stand der Technik neben einer Handhabe für den Zugriff eines Benutzers zahlreiche mechanische und elektronische Komponenten, wie z.B. kapazitive oder induktive Sensoren, Betätigungsschalter, Antennen für z.B. Keyless-Entry-Systeme oder Systeme zur Nahfeldkommunikation und mechanische Schließzylinder. Während im Normalbetrieb eine Aufhebung der Sperrwirkung der Sperrmittel über eine Ansteuerung eines Aktuators durch das Bordsystem des Fahrzeuges erfolgt, dient im herkömmlichen Notbetrieb der mechanische Schließzylinder im Fahrzeugtürgriff als Mittel zur Notentriegelung.

Der elektrische Antrieb ist gemäß der Erfindung im Fahrzeugtürgriff aufgenommen und als Ersatz für einen mechanischen Schließzylinder in dessen Bauraum platziert. Damit sind im Türgriff die erfindungsgemäße Steuerschaltung, die Kommunikationsschaltung, der elektrische Antrieb und die zweite Versorgungsschnittstelle aufgenommen. Bei dieser bevorzugten Gestaltung besteht für einen Benutzer im Notbetrieb bequemer Zugriff auf die Zugriffssteuereinrichtung und insbesondere deren zweite Versorgungsschnittstelle. Außerdem befindet sich der Fahrzeugtürgriff meist in unmittelbarer Nähe zu einer Öffnungsverriegelung mit Sperrmitteln in Gestalt eines Türschlosses.

Dieser Antrieb kann über einen Betätigungsabschnitt, ähnlich einem herkömmlichen mechanischen Schließzylinder, auf die Öffnungsverriegelung einwirken und eine Not-Entsperrung bewirken. Dazu wird von dem elektrischen Antrieb das damit gekoppelte Betätigungsmittel bewegt und die Bewegung auf die mechanischen Sperrmittel der Öffnungsverrieglung übertragen. Die Betätigungsmittel können z.B. in Form eines "Paddels" ausgebildet sein, wobei diese Formgestaltung von Fahrzeugtürgriffen mit mechanischen Schließzylindern bekannt ist.

Die erfindungsgemäße Zugriffssteuereinrichtung weist eine zweite Versorgungsschnittstelle zur Spannungsversorgung auf, die zur Aufnahme von Versorgungsspannung von einer externen Spannungsquelle ausgebildet ist. Diese zweite Versorgungsschnittstelle ist zur Spannungsversorgung mit wenigstens der Steuerschaltung, der Kommunikationsschaltung und dem elektrischen Antrieb gekoppelt.

Die Steuerschaltung überwacht die zweite Versorgungsschnittstelle auf dort anliegende Spannung und steuert die Kommunikationsschaltung in Abhängigkeit von erfassten Spannungswerten an der zweiten Versorgungsschnittstelle an.

Wird von der Steuerschaltung an der zweiten Versorgungsschnittstelle eine anliegende Spannung erfasst und erfüllt diese ggf. vorgegebene Bedingungen (beispielsweise hinsichtlich der Spannungshöhe, Dauer der anliegenden Spannung oder der Spannung aufgeprägter Signale), wird die Zugriffssteuereinrichtung für einen autonomen Notbetrieb vorbereitet. Weitere Bedingungen können vorgesehen sein, beispielsweise bestimmte Betätigungen an der Zugriffssteuereinrichtung (z.B. an einem Türgriff).

In diesem Notbetrieb wird eine vom Bordsystem des Fahrzeuges unabhängige Autorisierungsabfrage durch die Steuerschaltung ermöglicht, so dass auch bei Ausfall des Bordnetzes, unter Versorgung der Zugriffssteuereinrichtung über die zweite Versorgungsschnittstelle, ein geprüfter Zugang zum Fahrzeug möglich ist. Eine derart autonom geschaltete, also vom Fahrzeugnetz unabhängige Zugriffssteuereinrichtung führt selbständig unter Zugriff auf die Kommunikationsschaltung einen Authentifizierungsdialog durch und veranlasst eine Notentriegelung durch Ansteuerung des Antriebes. Dabei wird die Steuerschaltung (zumindest hilfsweise) über die zweite Versorgungsschnittstelle versorgt und versetzt die Kommunikationsschaltung in einen Bereitschaftszustand für einen Autorisierungsdialog. Die Kommunikationsschaltung stellt eine Kommunikationsschnittstelle bereit, über die ein externer Datenträger (insbesondere in Gestalt eines Mobilgerät) mit der Zugriffssteuereinrichtung gekoppelt wird und ein Autorisierungsdialog initiiert wird. Anschließend werden Daten von dem externen Datenträger über die Kommunikationsschaltung an die Steuerschaltung übermittelt. Dort werden die Daten anhand verifiziert, insbesondere mit gespeicherten Daten verglichen oder hinsichtlich einer Codierung oder Signatur geprüft. Die Steuerschaltung verfügt dazu über gespeicherte Informationen, die eine vom Bordsystem des Fahrzeuges unabhängige Prüfung einer Not-Zugangsberechtigung zum Fahrzeug ermöglichen. Dazu können insbesondere codierte Daten in einem dauerhaften Speicher der Steuerschaltung hinterlegt sein. Ist diese Verifikation erfolgreich, so steuert die Steuerschaltung den elektrischen Antrieb an, um die Sperrwirkung der Sperrmittel aufzuheben, so dass ein Notzugang zum Fahrzeug möglich ist. Unabhängig vom Bordsystem und durch externe Spannungsversorgung gestützt, ist auf diese Weise jederzeit ein Notzugang zum Fahrzeug möglich.

Die erfindungsgemäße Zugriffssteuereinrichtung kann im Fahrzeug an einer beliebigen Stelle mit verfügbarem Bauraum angeordnet sein, wobei die Komponenten auch verteilt angeordnet sein können, so dass z.B. der Antrieb in unmittelbarer Nähe zu einem Tür- oder Heckschloss platziert ist, um über die Betätigungsmittel eine Entsperrung zu ermöglichen, währen die übrigen Komponenten elektrisch gekoppelt, am räumlich entfernt platziert sind.

Es ist zu beachten, dass aufgrund der Authentifizierungsprüfung, die unabhängig vom Fahrzeugnetz und allein aufgrund der autonomen Handhabung der Authentifizierungsprüfung durch die erfindungsgemäße Zugriffssteuereinrichtung erfolgt, kein Zugriff auf sonstige Fahrzeugfunktionen vermittelt wird. Stattdessen wird lediglich ein Fahrzeugzugang gewährt, analog zu den Funktionen mechanischer Notschlüssel. Eine Authentifizierung erfolgt ausschließlich gegenüber der erfindungsgemäßen Zugriffssteuereinrichtung und nicht gegenüber dem bordseitigen und zentralen Steuersystem des Fahrzeuges. Die Zugriffssteuereinrichtung enthält erfindungsgemäß die Fähigkeit, für ausschließlich eine Aufhebung einer konkreten Sperre, z.B. eine Türentriegelung eine autonome Legitimationsprüfung durchzuführen. Die Sicherheitsanforderungen an einen solchen ausschließlichen Zugang zum Fahrzeug dürfen regelmäßig geringer sein als die Sicherheitsvorgaben für die Prüfung der Erlaubnis auf einen vollständigen Fahrzeugzugriff, insbesondere für eine Fahrerlaubnis und einen Motorstart.

In einer bevorzugten Gestaltung der Erfindung weist die Kommunikationsschaltung eine Sende-/Empfangseinrichtung für drahtlose Kommunikation auf. Die Kommunikationsschaltung wird nach der Aktivierung des Notbetriebs, also wenn die Steuerschaltung eine Spannungsversorgung an der zweiten Versorgungsschnittstelle erfasst, unter Spannungsversorgung über die zweite Versorgungsschnittstelle angesteuert und in einen Bereitschaftszustand für eine drahtlose Authentifizierung versetzt.

Dies bedeutet, dass die Kommunikationsschaltung in einen Zustand versetzt wird, in dem sie mit Kommunikationspartnern in der Nähe gemäß einem vorgegebenen Protokoll kommunizieren kann. Eine solche Kommunikation kann beispielsweise über einen Nahfunkstandard, beispielsweise den NFC-Standard stattfinden. Nahfeld-Kommunikationsschaltungen weisen im Zusammenhang mit einer Notbetätigung den Vorteil auf, dass die unmittelbare Nähe der Legitimationsmittel zu der Zugriffssteuereinrichtung sichergestellt sein muss. Kommunikationsmethoden mit größerer Reichweite können eine böswillige Zugriffsmöglichkeit schaffen während eine NFC-Kommunikation aufgrund der Reichweite von nur einigen Zentimetern sicherstellt, dass die Legitimationsmittel in Gestalt eines externen Datenträgers sich in unmittelbarer Nähe der Zugriffssteuereinrichtung befinden. In dem Bereitschaftszustand ist die Kommunikationsschaltung derart kommunikationsbereit, dass ein NFC-Datenträger, beispielsweise eine Schlüsselkarte oder ein Smartphone mit NFC-Funktionalität, in die Nähe der Kommunikationsschaltung gebracht werden kann und dann ein Datenaustausch zur Übertragung von Legitimationsdaten von dem externen Datenträger an die Zugriffssteuereinrichtung stattfinden kann. Die übermittelten Daten werden dann von der Kommunikationsschaltung an die Steuerschaltung übermittelt.

In einer bevorzugten Weiterbildung der Erfindung ist die zweite Versorgungsschnittstelle mit einem Steckverbinder ausgebildet, der in einem von außen zugänglichem Abschnitt des Fahrzeuges angeordnet ist. Ein solcher Steckverbinder kann in die Außenschale eines Türgriffes, beispielsweise an dessen Unterseite angebracht werden. Dieser Steckverbinder kann mit einer zugehörigen Abdeckkappe versehen sein, die vor Benutzung abzunehmen ist. Der Steckverbinder kann mit einer gängigen Schnittstelle und galvanischen Kontakten insbesondere als USB-Steckverbinder ausgebildet sein. Insbesondere kann der Steckverbinder ein USB-Stecker vom Typ B oder C sein. Auf diese Weise kann eine Versorgung über die zweite Versorgungsschnittstelle bereitgestellt werden, indem ein überall verfügbares USB-Kabel mit einer externen Spannungsquelle, beispielsweise einem Mobiltelefon oder einer Powerbank gekoppelt wird.

Es ist besonders vorteilhaft, wenn die Kommunikationsschaltung eine Datenschnittstelle mit galvanischer Kopplung aufweist, welche mit der zweiten Versorgungsschnittstelle als einheitlicher galvanischer Kopplungsbereich ausgebildet ist, so dass sowohl die Spannungsversorgung als auch die Datenkommunikation über den einheitlichen galvanischer Kopplungsbereich erfolgen.

Wird die Schnittstelle in vorstehend genannter Weise als USB-Steckverbinder ausgebildet, kann über dieselbe Schnittstelle sowohl die zweite Versorgungsschnittstelle als auch die Datenschnittstelle realisiert werden. Ein mit dem USB-Steckverbinder galvanisch gekoppeltes Mobilgerät, z.B. Smartphone, kann dann sowohl die Spannungsversorgung über die galvanische Kopplung bereitstellen als auch die Autorisierungsdaten über die Schnittstelle an die Steuerschaltung senden.

In einer Weiterbildung der Erfindung verfügt die Zugriffssteuereinrichtung über elektronische Trennmittel, welche eine Versorgung der Zugriffssteuereinrichtung durch die erste Versorgungsschnittstelle sperren und ggf. wiederherstellen können. Diese Trennmittel sind mit der Steuerschaltung derart gekoppelt, dass die Steuerschaltung durch Ansteuerung der elektronischen Trennmittel einen Spannungsdurchgang durch die erste Versorgungsschnittstelle sowohl sperren als auch freigeben kann.

Die Zugriffssteuereinrichtung mit der darin angeordneten Steuerschaltung kann sich gemäß dieser Ausführungsform selbstständig vom Bordnetz des Fahrzeuges abkoppeln, so dass ein Spannungsdurchgang vom Fahrzeug zur Zugriffssteuereinrichtung und von der Zugriffssteuereinrichtung zum Fahrzeug unterbunden ist. Die Steuerschaltung steuert die Trennmittel der ersten Versorgungsschnittstelle in Abhängigkeit von erfassten Spannungswerten an der zweiten Versorgungsschnittstelle an. Wird von der Steuerschaltung an der zweiten Versorgungsschnittstelle eine anliegende Spannung erfasst, so trennt die Steuerschaltung unter Ansteuerung der Trennmittel die Zugriffssteuereinrichtung vom Bordnetz. Auf diese Weise wird die Notbetätigung unabhängig vom Bordnetz des Fahrzeuges. In diesem Zustand wird zunächst sichergestellt, dass über die zweite Versorgungsschnittstelle eine Spannungsversorgung bereitgestellt ist, wobei die dort anliegende Spannung zum Betrieb der Komponenten in der Zugriffssteuereinrichtung für eine Notentriegelung oder auch Notverriegelung ausreichend sein muss. Die Entkopplung vom Bordnetz bewirkt, dass es nicht zu Störungen durch ggf. ein gestörtes Bordsystem kommen kann und insbesondere keine unerwünschten Stromabflüsse von der Zugriffssteuereinrichtung in das Bordsystem geben kann. Es kann in diesem Zusammenhang vorgesehen sein, dass die Trennmittel nicht nur die Spannungsversorgung vom übrigen Fahrzeug trennen, sondern auch einen Teil oder sämtliche Signalleitungen zwischen der Zugriffssteuereinrichtung und dem Bordsystem trennen.

In einer bevorzugten Weiterbildung der Erfindung sind elektronische Entkopplungsmittel vorgesehen, welche mit der ersten Versorgungsschnittstelle und der zweiten Versorgungsschnittstelle verbunden sind und eine Spannungsversorgung der Steuerschaltung sowohl über die erste Versorgungsschnittstelle als auch die zweite Versorgungsschnittstelle bereitstellen. Dabei nehmen die Entkopplungsmittel eine Entkopplung der Spannungsversorgung an der ersten Versorgungsschnittstelle von der Spannungsversorgung an der zweiten Versorgungsschnittstelle vor.

Eine Spannungsversorgung der Steuerschaltung und der weiteren Komponenten kann auf diese Weise alternativ oder gleichzeitig aus einer oder beiden der Schnittstellen erfolgen. Die Entkopplungsmittel sogen dafür, dass ein Stromabfluss von einer der Schnittstellen in das Versorgungsnetz der anderen Schnittstelle erfolgt. Insbesondere, wenn im Versorgungsnetz der ersten Versorgungsschnittstelle ein Kurzschluss auftritt, wird durch die Entkopplungsmittel sichergestellt, dass eine Versorgung der Steuerschaltung möglich ist, ohne dass ein Stromfluss in Richtung des Kurzschlusses stattfindet.

In einer bevorzugten Gestaltung der Erfindung enthält die Zugriffssteuereinrichtung außerdem einen elektrischen Energiespeicher, der mit der zweiten Versorgungsschnittstelle, der Steuerschaltung und dem Antrieb gekoppelt ist, wobei der elektrische Energiespeicher unter Überwachung der Steuerschaltung aus der zweiten Versorgungsschnittstelle aufladbar ist und wobei eine Antriebsenergie für den elektrischen Antrieb aus dem elektrischen Energiespeicher bereitgestellt wird.

Der elektrische Energiespeicher kann ein Akku oder ein geeigneter Kondensator sein, der nach Anliegen der Spannung an der zweiten Versorgungsschnittstelle aufgeladen wird. Liegt eine ausreichende Aufladung des Energiespeichers vor, um den elektrischen Antrieb, beispielsweise in Gestalt eines Elektromotors oder Servomotors für den Entriegelungsvorgang zu versorgen, so kann (in Abhängigkeit von einer erfolgreichen Legitimationsprüfung) die Ansteuerung des Antriebs erfolgen. Auf diese Weise wird ggf. die Notbetätigung verzögert, falls zunächst eine Ladung des Energiespeichers erforderlich ist, diese Verzögerung kann durch eine Signalisierung, zum Beispiel eine entsprechende LED am Türgriff, als Status-Information vermittelt werden.

Gemäß dem erfindungsgemäßen Verfahren wird die Zugriffssteuereinrichtung in zwei verschiedenen Betriebsmodi betrieben. In einem ersten Betriebsmodus wird die Zugriffssteuereinrichtung über eine erste Versorgungsschnittstelle mit Spannung von einer Spannungsversorgung eines Bordnetzes eines Fahrzeuges versorgt. Dieser erste Betriebsmodus ist der normale Betriebsmodus der Zugriffssteuereinrichtung.

Die Zugriffssteuereinrichtung weist jedoch noch eine zweite Versorgungsschnittstelle auf, die mit einer Steuerschaltung auf anliegende Spannung überwacht wird. Wenn an der zweiten Versorgungschnittstelle eine Spannung erfasst wird und die dort anliegende Spannung vorgegebene Kriterien erfüllt, wird in einen zweiten Betriebsmodus als Notbetriebsmodus gewechselt. In dem dann vorliegenden zweiten Betriebsmodus wird eine Kommunikationsschaltung der Zugriffssteuereinrichtung über die zweite Versorgungsschnittstelle spannungsversorgt und die Kommunikationsschaltung wickelt einen Authentifizierungsdialog zwischen dem Fahrzeugtürgriff und einem externen Kommunikationspartner ab. Unter weiterer Versorgung über die zweite Versorgungsschnittstelle und in Abhängigkeit von dem Authentifizierungsdialog, insbesondere in Abhängigkeit von empfangenen Daten, wird ein über die zweite Versorgungsschnittstelle versorgter elektrischer Antrieb zur Entsperrung eines Türsperrmittels angesteuert.

Bei dem genannten Verfahren kann in den autonomen zweiten Betriebsmodus unmittelbar eingetreten werden, wenn über die zweite Versorgungsschnittstelle ein ausreichendes Spannungsangebot vorliegt. Es können aber auch weitere Kriterien herangezogen werden, um das Vorliegen der Bedingungen für den Notbetriebsmodus zu prüfen. Insbesondere können weitere Prüfungen vorgesehen sein, ob tatsächlich Störungen im Bordnetz vorliegen, insbesondere ob von dort gelieferte Spannungen oder Signale einen Notbetrieb rechtfertigen.

In einer bevorzugten Ausführungsform des Verfahrens wird nach dem Wechsel in den zweiten Betriebsmodus zunächst ein Energiespeicher aufgeladen, wobei dazu Energie aus der zweiten Versorgungsschnittstelle verwendet wird. Dieser Energiespeicher dient als Energiepuffer für den elektrischen Antrieb.

Die Erfindung wird nun anhand der beiliegenden Zeichnungen näher erläutert.
Die Figuren 1a, 1b und 1c zeigen eine Außenansicht einer Ausführungsform eines erfindungsgemäßen Fahrzeugtürgriffes anhand von drei Stationen des Notbetriebsmodus;
Die Figuren 2a und 2b zeigen Komponenten des Fahrzeugtürgriffes gemäß der ersten Ausführungsform;
Figur 3a zeigt schematisch ein Zusammenwirken von Komponenten in einem erfindungsgemäßen Fahrzeugtürgriff bei Normalbetrieb des Fahrzeuges;
Figur 3b zeigt schematisch ein Zusammenwirken von Komponenten eines erfindungsgemäßen Türgriffes im Notbetrieb des Fahrzeugtürgriffes;

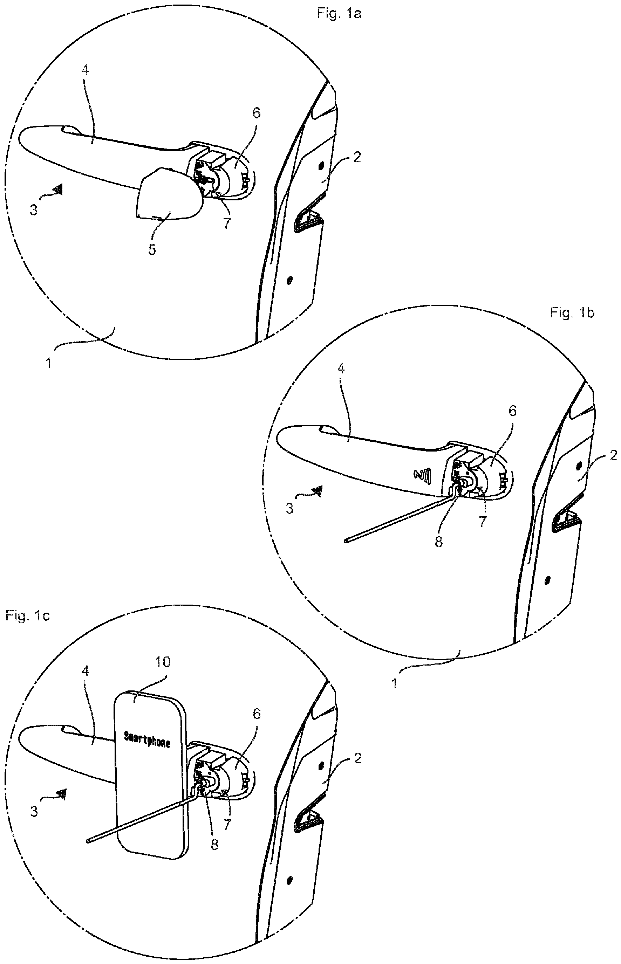

In Figur 1a ist ein Ausschnitt einer Fahrzeugtür mit einem Außenblech 1 und einem mechanischen Schloss 2 dargestellt. An der Außenseite des Fahrzeugblechs ist ein Türgriff 3 angeordnet, der eine Handhabe 4 aufweist, welche ein Benutzer zum Betätigen der Tür umgreifen kann. Endseitig an dem Fahrzeugtürgriff ist ein abnehmbarer Gehäuseteil 5 angeordnet, der im Normalbetrieb des Fahrzeugtürgriffes 3 ein Versorgungs- und Antriebsmodul 6 abdeckt. In Figur 1a ist zur Überleitung in den Notbetrieb der Gehäuseteil 5 von einem Benutzer mechanisch vom Türgriff abgehoben worden, so dass das darunterliegende Versorgungs- und Antriebsmodul 6 freiliegt. Wie unten weiter gezeigt, ist das Versorgungs- und Antriebsmodul 6 mit dem Türschloss 2 gekoppelt. Das Versorgungs- und Antriebsmodul 6 weist eine USB-Schnittstelle 7 als zweite Versorgungsschnittstelle des Türgriffes auf. Diese zweite Versorgungsschnittstelle ist üblicherweise von dem Gehäuseteil 5 bedeckt und spannungslos.

Um den Notbetrieb einzuleiten wird in die USB-Buchse 7 ein Versorgungsstecker 8 mit angeschlossenem Kabel eingesteckt, wie in Fig. 1b gezeigt. Der Versorgungsstecker 8 ist über das angeschlossene Kabel mit einer Spannungsquelle (nicht gezeigt), beispielsweise einer Powerbank oder einem Mobiltelefon gekoppelt. Auf diese Weise wird Spannung an der USB-Buchse 7 bereitgestellt. In diesem Zustand wird der Notbetriebsmodus aktiviert und der Türgriff wird von der Spannungsversorgung des Versorgungssteckers 8 gespeist.

Wie in Figur 1c gezeigt, kann anschließend, bei aktiviertem Notbetriebsmodus, ein NFC-fähiges Mobilgerät 10 in unmittelbarer Nähe des Fahrzeugtürgriffes gebracht werden, der eine NFC-Kommunikationseinrichtung in der Handhabe 4 aufweist. Zwischen dem Mobilgerät 10 und dem Fahrzeugtürgriff 3 wird dann ein Authentifizierungsdialog abgewickelt und unter Stromversorgung über die USB-Buchse 7 wird das Versorgungs- und Antriebsmodul 6 angesteuert, um das Türschloss 2 zu entriegeln.

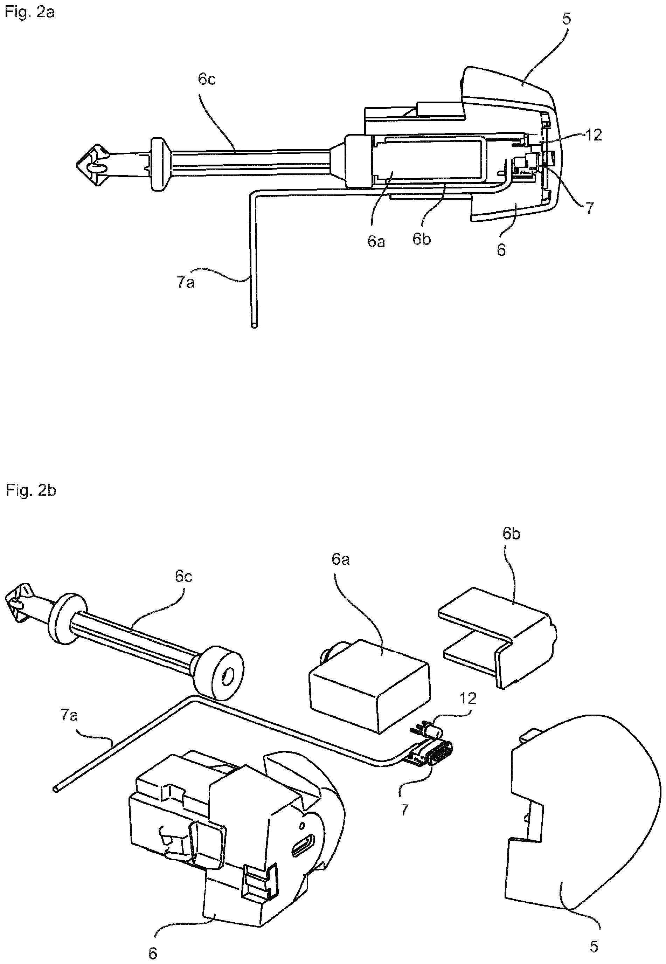

In Figuren 2a und 2b ist das Versorgungs- und Antriebsmodul 6 zusammen mit dem darauf anzuordnenden Gehäuseteil 5 gezeigt. Das Antriebsmodul 6 beinhaltet einen Servomotor 6a, der mit einem Schutzblech 6b gegen unerlaubten äußeren Zugriff gekapselt ist. Der Servomotor 6a ist mit einem Betätigungsabschnitt 6c gekoppelt, der in einem Endabschnitt (Paddel) zur Kopplung mit dem fahrzeugseitigen Türschloss geformt ist. Durch Drehung des Betätigungsabschnittes 6c kann eine Entsperrung der Tür bewirkt werden.

Die USB-Buchse 7 ist mit einer Spannungsleitung 7a verbunden, welche die Türgriffkomponenten, insbesondere die Steuerschaltung und die Kommunikationsschaltung mit Spannung versorgt. Eine LED 12 ist in einer entsprechenden Ausnehmung in dem Versorgungs- und Antriebsmodul 6 aufgenommen, um im Notbetriebsmodus einen Betriebszustand zu signalisieren, beispielsweise eine andauernde Aufladung eines Pufferspeichers durch eine blinkende LED.

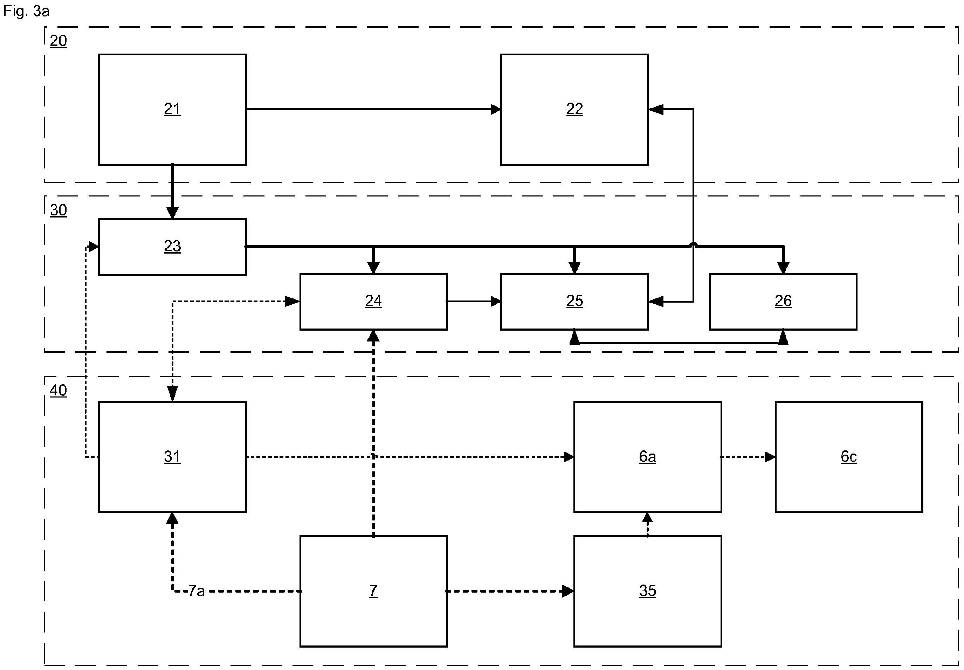

In Figur 3a sind die Komponenten des Ausführungsbeispiels eines erfindungsgemäßen Fahrzeugtürgriffes und deren Kopplung miteinander und an ein Fahrzeug gezeigt. Der Kasten 20 zeigt die fahrzeugseitigen Komponenten (nicht zur Erfindung gehörend). Bezugszeichen 21 bezeichnet eine fahrzeugseitige Spannungsversorgung, beispielsweise mit 12 Volt. Bezugszeichen 22 bezeichnet eine zentrale Steuereinrichtung des Fahrzeuges (Body Control Module - BCM).

Die Rahmen 30 und 40 umfassen die Komponenten im erfindungsgemäßen Türgriff, wobei die Komponenten im Rahmen 30 im Normalbetrieb aktiv sind und die Komponenten im Rahmen 40 im Notbetrieb relevant sind.

Der Fahrzeugtürgriff weist eine drahtlose Kommunikationseinrichtung in Gestalt eines NFC-Lesers 24 auf. Eine primäre Steuerelektronik 25, welche im Normalbetrieb die Steuerfunktionen des Türgriffs übernimmt, steht in Datenkommunikation mit der BCM 22. Außerdem ist im Fahrzeugtürgriff ein kapazitiver Sensor 26 für den Normalbetrieb des Türgriffes angeordnet, welcher Betätigungssignale an die primäre Steuerelektronik 25 liefert. Die Kommunikationsschaltung 24, die primäre Steuerelektronik 25 und der kapazitive Sensor 26 werden im Normalbetrieb mit der Spannungsversorgung von Fahrzeugseite durch die Fahrzeugversorgung 21 gekoppelt. Dabei erfolgt die Kopplung über die erste Versorgungsschnittstelle 23, welche eine Sperrschaltung zum Entkoppeln der Spannungsversorgungen von der Fahrzeugseite aufweist. Dies stellt sicher, dass bei vorhandener Notversorgung, z.B. im Falle eines Kurzschlusses im Bordsystem, kein Stromfluss von der zweiten Versorgungsschnittstelle in das Bordsystem erfolgt, da die Sperrschaltung den Stromfluss in diese Richtung verhindert.

Die im Rahmen 40 dargestellten Komponenten sind in dem dargestellten Normalbetrieb wirkungslos, daher sind die entsprechenden Wechselwirkungspfeile gebrochen dargestellt. Der Türgriff umfasst eine Steuerschaltung 31, die zweite Versorgungsschnittstelle 7 in Gestalt der USB-Schnittstelle sowie einen Energiespeicher 35 in Gestalt eines Kondensators. Ein elektrischer Antrieb in Gestalt des Servomotors 6a ist mechanisch mit dem Betätigungsabschnitt 6c gekoppelt.

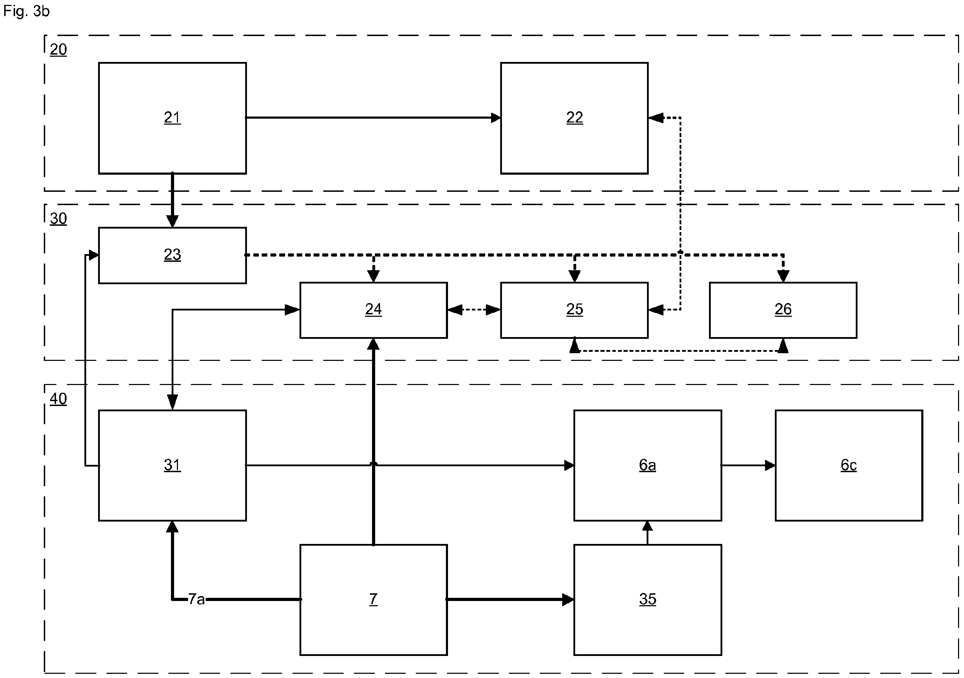

In Figur 3b ist der Notbetrieb schematisch dargestellt. Zur Einleitung des Notbetriebes wird, wie vorstehend beschrieben, die zweite Versorgungsschnittstelle 7 spannungsversorgt. Dies führt dazu, dass die Steuerschaltung 31 die Spannungsversorgung der zweiten Versorgungsschnittstelle 7 erfasst und den Notbetriebsmodus aktiviert. Bei anliegender Spannung an der zweiten Versorgungsschnittstelle werden die Komponenten 24, 25 und 26 versorgt, auch wenn die bordseitige Spannungsversorgung zusammengebrochen ist. Die Sensorik 26 sowie die primäre Steuerelektronik 25 sind in diesem Zustand wirkungslos. Weiterhin wird der Energiespeicher 35 über die Spannungsversorgung 7 aufgeladen.

In diesem Notbetrieb erfolgt nun unter Steuerung der Steuerschaltung 31 mit Hilfe der Kommunikationsschaltung 24 ein Authentifizierungsdialog, der über die NFC-Empfangsmittel in der Kommunikationsschaltung 24 und externen Datenträgern - ein Smartphone - geführt wird. Die empfangenen Daten werden an die Steuerschaltung 31 geliefert, welche die Authentizität der Daten überprüft. Dazu können fest in der Steuerschaltung einprogrammierte Legitimationsdaten mit empfangenen Daten verglichen werden.

Ist die Legitimationsprüfung erfolgreich, so steuert die Steuerschaltung 31 den Motor 6a an der, einen ausreichenden Ladezustand des Energiespeichers 35 vorausgesetzt, den Betätigungsabschnitt 6c antreibt und ein gekoppeltes Türschloss entriegelt. Sollte der Energiespeicher 35 zu diesem Zeitpunkt noch keinen ausreichenden Ladezustand aufweisen, kann dies durch ein Signal oder einer Anzeige auf dem NFC-Kommunikationspartnergerät signalisiert werden. Die Entsperrung findet dann statt, wenn der Ladezustand des Energiespeichers ausreichend ist.

Während in der gesamten Anmeldung vorstehend der Wechsel von einem Normalmodus in den Notbetriebsmodus beschrieben wurde, kann in einfacher Weise auch in den normalen Betriebsmodus zurückgekehrt werden. Wird in den vorgenannten Fällen die zweite Versorgungsschnittstelle von einer Spannungsversorgung getrennt, kann die Steuerschaltung 31 den Normalbetrieb des Türgriffes wiederherstellen.

In diesem Ausführungsbeispiel sind die primäre Steuerelektronik 25 und die Steuerschaltung 31 als getrennte Komponenten dargestellt, um die Erfindung zu verdeutlichen. Die Steuerfunktionen können jedoch auch durch dieselbe Steuerkomponente im Normalbetrieb und im Notbetrieb realisiert werden, wobei eine Integration der Funktionen von primärer Steuerelektronik 25 und Steuerschaltung 31 in eine einheitliche Schaltung vorzusehen ist.

## Patentansprüche

1. Zugriffssteuereinrichtung zur Anordnung in oder an einem Kraftfahrzeug, mit einer Steuerschaltung (31) und einer damit gekoppelten Kommunikationsschaltung (24),
mit einem elektrischen Antrieb (6a), der mit einem Betätigungsabschnitt (6c) gekoppelt ist, wobei der Betätigungsabschnitt zur Kopplung mit einem fahrzeugseitigen mechanischen Sperrmittel einer Öffnungsverrieglung ausgebildet ist, wobei der elektrische Antrieb (6a) unter Ansteuerung der Steuerschaltung (31) den Betätigungsabschnitt antreibt, um eine Sperrwirkung der Sperrmittel zu verändern,
mit einer ersten Versorgungsschnittstelle zur Kopplung der Zugriffssteuereinrichtung mit der Spannungsversorgung eines Bordnetzes eines Fahrzeuges, wobei
die Zugriffssteuereinrichtung eine zweite Versorgungsschnittstelle (7) zur Spannungsversorgung von einer externen Spannungsquelle aufweist, wobei die zweite Versorgungsschnittstelle wenigstens mit der Steuerschaltung (31), der Kommunikationsschaltung (24) und dem elektrischen Antrieb (6a) gekoppelt ist,
wobei die Steuerschaltung (31) die zweite Versorgungsschnittstelle (7) auf daran anliegende Spannung überwacht und ausgebildet ist, die Kommunikationsschaltung in Abhängigkeit von erfassten Spannungswerten an der zweiten Versorgungsschnittstelle anzusteuern, um eine Datenkommunikation zu initiieren,
wobei die Steuerschaltung ausgebildet ist, um in Abhängigkeit von in der Datenkommunikation übermittelten Daten den elektrischen Antrieb zur Bewegung des Betätigungsabschnitts anzusteuern, um die Sperrwirkung der Sperrmittel aufzuheben,
**dadurch gekennzeichnet, dass** ein Fahrzeugtürgriff ausgebildet ist, in welchem die Steuerschaltung, die Kommunikationsschaltung, der elektrische Antrieb und die zweite Versorgungsschnittstelle aufgenommen sind, und wobei der elektrische Antrieb im Fahrzeugtürgriff aufgenommen und als Ersatz für einen mechanischen Schließzylinder in dessen Bauraum platziert ist.

2. Zugriffssteuereinrichtung nach Anspruche 1, wobei die Kommunikationsschaltung eine Sende-/Empfangseinrichtung für drahtlose Kommunikation aufweist.

3. Zugriffssteuereinrichtung nach Anspruch 2, wobei die Sende-/Empfangseinrichtung eine Nahfeld-Sende-/Empfangseinrichtung ist.

4. Zugriffssteuereinrichtung nach Anspruch 1, wobei die Kommunikationsschaltung eine Datenschnittstelle mit galvanischer Kopplung aufweist, welche mit der zweiten Versorgungsschnittstelle als einheitlicher galvanischer Kopplungsbereich ausgebildet ist, so dass sowohl die Spannungsversorgung als auch die Datenkommunikation über den einheitlichen galvanischer Kopplungsbereich erfolgen.

5. Zugriffssteuereinrichtung nach einem der vorangehenden Ansprüche, wobei die erste Versorgungsschnittstelle elektronische Trennmittel (23) aufweist, welche mit der Steuerschaltung (31) derart gekoppelt sind, dass die Steuerschaltung durch Ansteuerung der elektronischen Trennmittel (23) einen Spannungsdurchgang durch die erste Versorgungsschnittstelle sowohl sperren als auch freigeben kann,
wobei die Steuerschaltung (31) ausgebildet ist, die Trennmittel (23) in Abhängigkeit von erfassten Spannungswerten an der zweiten Versorgungsschnittstelle anzusteuern.

6. Zugriffssteuereinrichtung nach einem der vorangehenden Ansprüche, wobei elektronische Entkopplungsmittel vorgesehen sind, welche mit der ersten Versorgungsschnittstelle und der zweiten Versorgungsschnittstelle verbunden sind und eine Spannungsversorgung der Steuerschaltung sowohl über die erste Versorgungsschnittstelle als auch die zweite Versorgungsschnittstelle bereitstellen, wobei eine Entkopplung der Spannungsversorgung an der ersten Versorgungsschnittstelle von der Spannungsversorgung an der zweiten Versorgungsschnittstelle erfolgt.

7. Zugriffssteuereinrichtung nach einem der vorangehenden Ansprüche, wobei ein elektrischer Energiespeicher mit der zweiten Versorgungsschnittstelle, der Steuerschaltung und dem Antrieb gekoppelt ist, wobei der elektrische Energiespeicher unter Überwachung der Steuerschaltung aus der zweiten Versorgungsschnittstelle aufladbar ist und wobei eine Antriebsenergie für den elektrischen Antrieb aus dem elektrischen Energiespeicher bereitgestellt wird.

8. Zugriffssteuereinrichtung nach einem der vorangehenden Ansprüche, wobei die zweite Versorgungsschnittstelle einen Steckverbinder aufweist, der in einem von außen zugänglichen Abschnitt eines Fahrzeugs angeordnet ist.

## Claims

1. Access control device for disposition in or on a motor vehicle, comprising a control circuit (31) and a communication circuit (24) coupled thereto,
having an electric actuator (6a) which is coupled to an actuating section (6c), the actuating section being designed for coupling to a vehicle-side mechanical blocking means of an opening lock, the electric actuator (6a) driving the actuating section under the control of the control circuit (31) in order to change a blocking operation of the blocking means,
having a first supply interface for coupling the access control device to the voltage supply of an on-board power system of a vehicle, wherein
the access control device has a second supply interface (7) for supplying voltage from an external voltage source, the second supply interface being coupled at least to the control circuit (31), the communications circuit (24) and the electric actuator (6a)
wherein the control circuit (31) monitors the second supply interface (7) for voltage applied thereto and is configured to drive the communication circuit in dependence on detected voltage values at the second supply interface to initiate data communication,
the control circuit being designed, as a function of data transmitted in the data communication, to activate the electric actuator for moving the actuating section in order to cancel the blocking operation of the blocking means
**characterized in that**
a vehicle door handle is formed in which the control circuit, the communication circuit, the electric actuator and the second supply interface are accommodated, and wherein the electric actuator is accommodated in the vehicle door handle and is placed in its installation space as a substitute for a mechanical lock cylinder.

2. Access control device according to claim 1, wherein the communication circuit comprises a transmitting/receiving device for wireless communication.

3. Access control device according to claim 2, wherein the transmitting/receiving device is a near-field transmitting/receiving device.

4. Access control device according to claim 1, wherein said communication circuit comprises a galvanically coupling data interface formed with said second voltage supply interface as a unified galvanic coupling section, so that both voltage supply and data communication are performed via said unified galvanic coupling section.

5. Access control device according to any one of the preceding claims, wherein the first supply interface comprises electronic isolation means (23) coupled to the control circuit (31) such that the control circuit can both inhibit and enable voltage passage through the first supply interface by driving the electronic isolation means (23),
wherein the control circuit (31) is configured to control the disconnecting means (23) in dependence on detected voltage values at the second supply interface.

6. Access control device according to one of the preceding claims, wherein electronic decoupling means are provided which are connected to the first supply interface and the second supply interface and provide a voltage supply to the control circuit both via the first supply interface and the second supply interface, wherein decoupling of the voltage supply at the first supply interface from the voltage supply at the second supply interface takes place.

7. Access control device according to any one of the preceding claims, wherein an electrical energy storage device is coupled to the second supply interface, the control circuit and the drive, wherein the electrical energy storage device can be charged from the second supply interface under monitoring of the control circuit, and wherein a drive energy for the electric actuator is provided from the electrical energy storage device.

8. Access control device according to any one of the preceding claims, wherein the second supply interface comprises a connector arranged in an externally accessible portion of a vehicle.

## Revendications

1. Dispositif de commande d'accès destiné à être placé dans ou sur un véhicule automobile, comprenant un circuit de commande (31) et un circuit de communication (24) couplé à celui-ci,
avec un entraînement électrique (6a) qui est couplé à une section d'actionnement (6c), la section d'actionnement étant conçue pour être couplée à un moyen de blocage mécanique côté véhicule d'un verrouillage d'ouverture, l'entraînement électrique (6a) entraînant la section d'actionnement sous la commande du circuit de commande (31) afin de modifier un effet de blocage du moyen de blocage,
avec une première interface d'alimentation pour le couplage du dispositif de commande d'accès à l'alimentation en tension d'un réseau de bord d'un véhicule, dans lequel
le dispositif de commande d'accès comprend une seconde interface d'alimentation (7) pour une alimentation en tension à partir d'une source de tension externe, la seconde interface d'alimentation étant couplée au moins au circuit de commande (31), au circuit de communication (24) et à l'entraînement électrique (6a),
le circuit de commande (31) surveillant la tension appliquée à la deuxième interface d'alimentation (7) et étant conçu pour commander le circuit de communication en fonction des valeurs de tension détectées sur la deuxième interface d'alimentation, afin d'initier une communication de données,
le circuit de commande étant conçu pour commander, en fonction de données transmises dans la communication de données, l'entraînement électrique pour le déplacement de la section d'actionnement, afin de supprimer l'effet de blocage des moyens de blocage,
**caractérisé en ce qu'**une poignée de porte de véhicule est réalisée, dans laquelle sont logés le circuit de commande, le circuit de communication, l'entraînement électrique et la deuxième interface d'alimentation, et l'entraînement électrique étant logé dans la poignée de porte de véhicule et placé dans son espace de construction en remplacement d'un cylindre de fermeture mécanique.

2. Dispositif de commande d'accès selon la revendication 1, dans lequel le circuit de communication comprend un dispositif d'émission/réception pour une communication sans fil.

3. Dispositif de commande d'accès selon la revendication 2, dans lequel le dispositif d'émission/réception est un dispositif d'émission/réception en champ proche.

4. Dispositif de commande d'accès selon la revendication 1, dans lequel le circuit de communication comprend une interface de données à couplage galvanique qui est formée avec la deuxième interface d'alimentation en tant que zone de couplage galvanique unitaire, de sorte que l'alimentation en tension et la communication de données sont toutes deux réalisées par l'intermédiaire de la zone de couplage galvanique unitaire.

5. Dispositif de commande d'accès selon l'une quelconque des revendications précédentes, dans lequel la première interface d'alimentation comporte des moyens électroniques de coupure (23) couplés au circuit de commande (31) de telle sorte que le circuit de commande peut à la fois bloquer et autoriser un passage de tension à travers la première interface d'alimentation en commandant les moyens électroniques de coupure (23),
le circuit de commande (31) étant conçu pour commander les moyens de séparation (23) en fonction des valeurs de tension détectées sur la deuxième interface d'alimentation.

6. Dispositif de commande d'accès selon l'une quelconque des revendications précédentes, dans lequel il est prévu des moyens de découplage électroniques qui sont reliés à la première interface d'alimentation et à la deuxième interface d'alimentation et qui fournissent une alimentation en tension au circuit de commande à la fois par l'intermédiaire de la première interface d'alimentation et de la deuxième interface d'alimentation, un découplage de l'alimentation en tension sur la première interface d'alimentation par rapport à l'alimentation en tension sur la deuxième interface d'alimentation étant effectué.

7. Dispositif de commande d'accès selon l'une des revendications précédentes, dans lequel un accumulateur d'énergie électrique est couplé à la deuxième interface d'alimentation, au circuit de commande et à l'entraînement, dans lequel l'accumulateur d'énergie électrique peut être chargé à partir de la deuxième interface d'alimentation sous la surveillance du circuit de commande et dans lequel une énergie d'entraînement pour l'entraînement électrique est fournie par l'accumulateur d'énergie électrique.

8. Dispositif de commande d'accès selon l'une quelconque des revendications précédentes, dans lequel la deuxième interface d'alimentation comprend un connecteur disposé dans une partie accessible de l'extérieur d'un véhicule.
